Europäisches Patentamt

European Patent Office

Office européen des brevets

(11) Publication number: **0 363 920**
**A2**

# EUROPEAN PATENT APPLICATION

(21) Application number: **89118860.9**

(22) Date of filing: **11.10.89**

(51) Int. Cl.5: **B29C 61/06 , B29C 61/00**

(30) Priority: **14.10.88 JP 257229/88**

(43) Date of publication of application:
**18.04.90 Bulletin 90/16**

(84) Designated Contracting States:
**BE CH DE FR GB IT LI NL SE**

(71) Applicant: **MITSUBISHI JUKOGYO KABUSHIKI KAISHA**
**5-1, Marunouchi 2-chome Chiyoda-ku Tokyo 100(JP)**

(72) Inventor: **Hayashi, Sunichi Nagoya Technical Inst. MITSUBISHI**
**JUKOGYO K.K. 1, Aza-Takmichi Iwatsuka-cho Nakamura-ku Nagoya Aichi Pref.(JP)**
Inventor: **Wakita, Yoshiaki Nagoya Technical Inst. MITSUBISHI**
**JUKOGYO K.K. 1, Aza-Takmichi Iwatsuka-cho Nakamura-ku Nagoya Aichi Pref.(JP)**

(74) Representative: **Görtz, Dr. Fuchs, Dr. Luderschmidt Patentanwälte**
**Abraham-Lincoln-Strasse 7 Postfach 46 60 D-6200 Wiesbaden(DE)**

(54) Shape memory transparent body and method of using same.

(57) A shape memory transparent body formed from a shape memory transparent polymer having a glass transition point higher than the temperature at which the transparent body is used, said transparent body remembering a basic shape, taking on a second shape upon heating to a temperature higher than the glass transition point and subsequent cooling to a temperature lower than the glass transition point, with the transparent body kept deformed by an external force for the setting of the deformed shape, and restoring the basic shape upon heating to a temperature higher than the glass transition point; and a method of using the shape memory transparent body.

# SHAPE MEMORY TRANSPARENT BODY AND METHOD OF USING THE SAME

## 2. FIELD OF THE INVENTION AND RELATED ART STATEMENT

The present invention relates to a plastic transparent body having the shape memory function and a method of using the same.

Highly transparent plastics have found use as moldings in various shapes such as containers and lenses. These products are given a single shape by molding such as compression molding, injection molding, and extrusion molding, and they are used in the as-molded shape. Transparent plastic bodies are not yet known which can be used not only in the as-molded shape but also in the second deformed shape, or even in the original shape after restoration from the second deformed shape.

## 3. OBJECT AND SUMMARY OF THE INVENTION

It is an object of the present invention to provide a transparent body which remembers a first shape (basic shape) and takes on a second shape as well. It is another object of the present invention to provide a method of using the transparent body.

The gist of the present invention resides in a shape memory transparent body formed from a shape memory transparent polymer having a glass transition point higher than the temperature at which the transparent body is used, said transparent body being capable of remembering a basic shape, taking on a second shape upon heating to a temperature higher than the glass transition point and subsequent cooling to a temperature lower than the glass transition point, with the transparent body kept deformed in a desired shape in a frame or proper shape keeping means for the setting of the deformed shape, and restoring the first shape whenever necessary upon heating to a temperature higher than the glass transition point. The gist of the present invention also resides in ·a method of using the shape memory transparent body.

The present invention provides a shape memory transparent body which remembers a first shape (basic shape), takes on a second shape upon deformation with simple heating operation, and restores its first shape (basic shape) easily when necessary.

## 4. DETAILED DESCRIPTION OF PREFERRED EMBODIMENTS

By the shape memory polymer is generally meant any polymer which remembers its initial molded shape, has its deformed shape set when it is deformed at a temperature higher than the glass transition point (Tg for short hereinafter) of the polymer and lower than the molding temperature of the polymer and then cooled to a temperature lower than the Tg while it is kept deformed, and restores its original molded shape when it is heated to a temperature higher than the Tg. This polymer can be used in two ways according to its as-molded shape and deformed shape which can be selected by a simple heating operation.

According to the present invention, the shape memory transparent body can be produced from any one of the above-defined shape memory polymers which is highly trans parent and is easy to heat and cool for deformation. The transparent body remembers the basic memory and takes on the second shape. Therefore, the transparent body can be used effectively in two ways according to its shape, and hence it can be applied to a variety of uses. Examples of the uses include window material, adjustable curve rulers, and goldfish globes as illustrated in the embodiments mentioned later. Additional examples include interior decorations (and raw materials thereof) formed by the combination of the transparent bodies in their basic shape such as plate, rod, cylinder, and globe with the transparent bodies in their deformed shape.

The transparent body of the present invention may be produced from any polymer so long as it meets the following requirements. It should be transparent. It should have a Tg higher than the temperature at which the transparent body is used. It should have the shape memory function. It should have a certain level of hardness at the temperature at which the transparent body is used and also have a certain level of softness that permits easy deformation at the temperature at which the transparent body is deformed. It should have a Tg which permits the smooth transition from the basic shape to the second shape.

The transparent body may have physical properties which vary to some extent depending on the kind and formulation of raw materials and the conditions of synthesis, which are selected according to the intended use of the transparent body. The transparent body can be produced by any molding method for plastics, such as injection molding, extrusion molding, blow molding, compression molding, and transfer molding. The first three molding methods are desirable on account of their processing capability.

As the shape memory polymer that can be used in the present invention may be cited urethane polymers, styrene-butadiene polymers, crystalline diene polymer, and norbornane polymer. Preferable among these polymers is polyurethane prepared by prepolymer process from a difunctional diisocyanate, a difunctional polyol, and a difunctional chain extender containing active hydrogen in a molar ratio of 2.00-1.10 : 1.00 : 1.00-0.10, preferably 1.80-1.20 : 1.00 : 0.80-0.20. This polyurethane contains NCO groups and OH groups in almost equal amounts at the terminals of the polymer chains. It also has a Tg in the range of -50 to 60 °C and a crystallinity of 3 to 50 wt%, and hence it is superior in moldability.

This polymer contains substantially no excess NCO groups at the terminals of the polymer chains and hence contains no allophanate links which form rigid crosslinks. Therefore, it is a thermoplastic chain polymer which can be processed freely. In addition, having an adequate crystallinity, this chain polymer exhibit a desired modulus.

The crystallinity should preferably be in the range of 3 to 50 wt%. With a crystallinity lower than 3 wt%, the polymer will have a low rubber elasticity at a temperature higher than Tg. Conversely, with a crystallinity higher than 50 wt%, the polymer will have a high rubber elasticity at a temperature higher than Tg, with the result that the ratio of moduli at temperatures 10 °C above and below Tg is smaller and hence the shape recovery performance is poor.

The polymer can be produced from the following raw materials, which are illustrative only and not limitative.

The first raw material is a difunctional isocyanate which is represented by the general formula OCN-R-NCO, where R is a group having no or one or two benzene rings. It includes, for example, 2,4-toluene diisocyanate, 4,4'-diphenylmethane diisocyanate, carbodiimide-modified 4,4'-diphenylmethane diisocyanate, and hexamethylene diisocyanate.

The second raw material is a difunctional polyol which is represented by the general formula OH-R'-OH, where R' is a group having no or one or two benzene rings. The second raw material may also be a reaction product of said difunctional polyol and a difunctional carboxylic acid or cyclic ether. It includes, for example, polypropylene glycol, 1,4-butane glycol adipate, polytetramethylene glycol, polyethylene glycol, and an adduct of bisphenol-A with propylene oxide.

The third raw material is a difunctional chain extender containing active hydrogen which is represented by the general formula OH-R''-OH, where R'' is a $(CH_2)_n$ group or a groups having one or two benzene rings. It includes, for example, ethylene glycol, 1,4-butane glycol, bis(2-hydroxyethyl)hydroquinone, an adduct of bisphenol-A with ethylene oxide, and an adduct of bisphenol-A with propylene oxide.

The above-mentioned three raw materials (isocyanate, polyol, and chain extender) are made into a urethane elastomer (by the aid of an optional catalyst) by prepolymer process in the following manner.

First, the diisocyanate and polyol are reacted in a specific molar ratio of [NCO]/[OH] to give a prepolymer. When the reaction is complete, the chain extender is added in an amount sufficient to establish a desired molar ratio of [chain extender]/[prepolymer]. After defoaming, the resulting mixture is poured into a mold, followed by curing for crosslinking reaction at 80 °C for one or two days in a constant temperature dryer. This process may be carried out with or without solvent.

The polyurethane elastomer produced as mentioned above will have a Tg and other physical properties as desired, if the following six factors are properly selected.

(1) the kind of the isocyanate, (2) the kind of the polyol,

(3) the kind of the chain extender,

(4) the [NCO]/[OH] molar ratio,

(5) the [chain extender]/[prepolymer] molar ratio, and

(6) the curing condition.

The thus produced polyurethane elastomer may be represented by the following general formula.

$$HOR''OCONH(RNHCOOR'OCONH)_nRNHCOOR''OCONH(RNHCOOROCONH)_mRNHCOOR''OH$$

where m is 1-16 and n is 0-16.

Examples 1 to 40

The following illustrates the production of the shape memory polyurethane. First, a prepolymer was prepared by reacting, in the absence of catalyst, an isocyanate component and a polyol component in the ratio shown in Table 1. To the prepolymer was added a chain extender in the ratio shown in Table 1. The resulting mixture was heat-cured to give shape memory polyurethane, which had the basic physical properties as shown in Table 1.

In Table 1, E/E' represents the ratio of the tensile modulus at a temperature 10 °C lower than Tg to the tensile modulus at a temperature 10 °C higher than Tg. The crystallinity (wt%) was measured by X-ray diffractometry. The Tg (°C) was measured by the DSC method (differential scanning calorimetry). The tensile modulus was measured according to the method provided in JIS K-7113 (Japanese Industrial Standards).

Table 1

| Raw materials and molar ratio | | M.W. | 1 | 2 | 3 | 4 | 5 | 6 | 7 | 8 | 9 | 10 |
|---|---|---|---|---|---|---|---|---|---|---|---|---|
| Diisocyanate | 2,4-toluene diisocyanate | 174 | 1.5 | | | 1.5 | | | | | | |
| | 4,4'-diphenylmethane diisocyanate | 250 | | | | | 1.5 | | | 1.5 | 1.5 | 1.5 |
| | 4,4'-diphenylmethane diisocyanate (carbodiimide-modified) | 290 | | | | | | 1.5 | | | | |
| | ditto | 303 | | 1.5 | 1.5 | | | | | | | |
| | hexamethylene diisocyanate | 168 | | | | | | | 1.5 | | | |
| Polyol | polypropylene glycol | 400 | | | | | | | | | | |
| | ditto | 700 | | | 1.0 | 1.0 | 1.0 | 1.0 | 1.0 | 1.0 | 1.0 | 1.0 |
| | ditto | 1000 | 0.88 | | | | | | | | | |
| | 1,4-butaneglycol adipate | 600 | | | | | | | | | | |
| | ditto | 1000 | | | | | | | | | | |
| | ditto | 2000 | | | | | | | | | | |
| | polytetramethylene glycol | 650 | | | | | | | | | | |
| | ditto | 850 | | | | | | | | | | |
| | ditto | 1000 | | · | | | | | | | | |
| | polyethylene glycol | 600 | | | | | | | | | | |
| | bisphenol-A + propylene oxide | 800 | 1.0 | | | | | | | | | |
| Chain extender | ethylene glycol | 62 | | | | | | | | 0.51 | | |
| | 1,4-butane glycol | 90 | 0.51 | | | | | | | | 0.51 | |
| | bis(2-hydroxyethyl)hydroquinone | 198 | | | | | | | | | | |
| | bisphenol-A + ethylene oxide | 327 | | | | | | | | | | |
| | ditto | 360 | | 0.51 | 0.51 | 0.51 | 0.51 | 0.51 | 0.51 | | | |
| | bisphenol-A + propylene oxide | 360 | | | | | | | | | | 0.51 |
| Measured values of physical properties | Tg (°C) | | 24 | −10 | 15 | −11 | 14 | 16 | −45 | 9 | 6 | 12 |
| | E/E' | | 170 | 73 | 69 | 23 | 129 | 133 | 20 | 117 | 128 | 97 |
| | Crystallinity (wt%) | | | 20 | 20 | 30 | | | 25 | | | |

Table 1  (continued)

| Raw materials and molar ratio | | M.W. | 11 | 12 | 13 | 14 | 15 | 16 | 17 | 18 | 19 | 20 |
|---|---|---|---|---|---|---|---|---|---|---|---|---|---|
| Diisocyanate | 2,4-toluene diisocyanate | 174 | | | | | | | | | | |
| | 4,4'-diphenylmethane diisocyanate | 250 | 1.5 | 1.5 | 1.5 | 1.2 | 1.8 | 1.35 | 1.35 | 1.35 | 1.35 | 1.35 |
| | 4,4'-diphenylmethane diisocyanate (carbodiimide-modified) | 290 | | | | | | | | | | |
| | ditto | 303 | | | | | | | | | | |
| | hexamethylene diisocyanate | 168 | | | | | | | | | | |
| Polyol | polypropylene glycol | 400 | | | | | | | | | | |
| | ditto | 700 | 1.0 | 1.0 | | 1.0 | 1.0 | 1.0 | | | | |
| | ditto | 1000 | | | | | | | 1.0 | | | |
| | 1,4-butaneglycol adipate | 600 | | | | | | | | 1.0 | | |
| | ditto | 1000 | | | | | | | | | 1.0 | |
| | ditto | 2000 | | | | | | | | | | 1.0 |
| | polytetramethylene glycol | 650 | | | | | | | | | | |
| | ditto | 850 | | | | | | | | | | |
| | ditto | 1000 | | | | | | | | | | |
| | polyethylene glycol | 600 | | | 1.0 | | | | | | | |
| | bisphenol-A + propylene oxide | 800 | | | | | | | | | | |
| Chain extender | ethylene glycol | 62 | | | | | | | | | | |
| | 1,4-butane glycol | 90 | | | | | | | | | | |
| | bis(2-hydroxyethyl)hydroquinone | 198 | | 0.51 | | | | | | | | |
| | bisphenol-A + ethylene oxide | 327 | 0.51 | | | 0.21 | 0.81 | 0.36 | 0.36 | 0.36 | 0.36 | 0.36 |
| | ditto | 360 | | | | | | | | | | |
| | bisphenol-A + propylene oxide | 360 | | | | | | | | | | |
| Measured values of physical properties | Tg (°C) | | 16 | −7 | −6 | −4 | 25 | 5 | −22 | 10 | −18 | −45 |
| | E/E' | | 111 | 49 | 12 | 105 | 53 | 37 | 81 | 100 | 29 | 30 |
| | Crystallinity (wt%) | | | 20 | 30 | | 20 | 25 | | | 25 | 25 |

EP 0 363 920 A2

Table 1 (continued)

| Raw materials and molar ratio | | M.W. | 21 | 22 | 23 | 24 | 25 | 26 | 27 | 28 | 29 | 30 |
|---|---|---|---|---|---|---|---|---|---|---|---|---|---|
| Diisocyanate | 2,4-toluene diisocyanate | 174 | | | | | | | 1.5 | 1.4 | 1.3 | 1.2 |
| | 4,4'-diphenylmethane diisocyanate | 250 | 1.35 | 1.35 | 1.35 | 1.5 | 1.5 | 1.35 | | | | |
| | 4,4'-diphenylmethane diisocyanate (carbodiimide-modified) | 290 | | | | | | | | | | |
| | ditto | 303 | | | | | | | | | | |
| | hexamethylene diisocyanate | 168 | | | | | | | | | | |
| Polyol | polypropylene glycol | 400 | | | | | | 1.0 | | | | |
| | ditto | 700 | | | | 1.0 | 1.0 | | | | | |
| | ditto | 1000 | | | | | | | | | | |
| | 1,4-butaneglycol adipate | 600 | | | | | | | | | | |
| | ditto | 1000 | | | | | | | | | | |
| | ditto | 2000 | | | | | | | | | | |
| | polytetramethylene glycol | 650 | 1.0 | | | | | | | | | |
| | ditto | 850 | | 1.0 | | | | | | | | |
| | ditto | 1000 | | | 1.0 | | | | | | | |
| | polyethylene glycol | 600 | | | | | | | | | | |
| | bisphenol-A + propylene oxide | 800 | | | | | | | 1.0 | 1.0 | 1.0 | 1.0 |
| Chain extender | ethylene glycol | 62 | | | | | | | | | | |
| | 1,4-butane glycol | 90 | | | | | | | | | | |
| | bis(2-hydroxyethyl)hydroquinone | 198 | | | | | | | 0.51 | 0.41 | 0.31 | 0.21 |
| | bisphenol-A + ethylene oxide | 327 | 0.36 | 0.36 | 0.36 | 0.43 | 0.35 | 0.36 | | | | |
| | ditto | 360 | | | | | | | | | | |
| | bisphenol-A + propylene oxide | 360 | | | | | | | | | | |
| Measured values of physical properties | Tg (°C) | | −18 | −30 | −38 | 5 | 8 | 23 | 26 | 21 | 19 | 19 |
| | E/E' | | 33 | 18 | 40 | 33 | 100 | 126 | 140 | 125 | 108 | 101 |
| | Crystallinity (wt%) | | 25 | 25 | | 25 | 15 | 15 | 10 | 15 | 15 | 15 |

EP 0 363 920 A2

Table 1 (continued)

| Raw materials and molar ratio | | M.W. | 31 | 32 | 33 | 34 | 35 | 36 | 37 | 38 | 39 | 40 |
|---|---|---|---|---|---|---|---|---|---|---|---|---|
| Diisocyanate | 2,4-toluene diisocyanate | 174 | | | 1.5 | | | | | | | |
| | 4,4'-diphenylmethane diisocyanate | 250 | 1.59 | 1.68 | | 1.3 | 1.7 | 1.59 | 1.68 | 1.5 | 1.5 | 1.81 |
| | 4,4'-diphenylmethane diisocyanate (carbodiimide-modified) | 290 | | | | | | | | | | |
| | ditto | 303 | · | | | | | | | | | |
| | hexamethylene diisocyanate | 168 | | | | | | | | | | |
| Polyol | polypropylene glycol | 400 | | | | | | | | | | |
| | ditto | 700 | 1.0 | 1.0 | | 1.0 | 1.0 | 1.0 | 1.0 | | | |
| | ditto | 1000 | | | | | | | | | | |
| | 1,4-butaneglycol adipate | 600 | | | | | | | | | | |
| | ditto | 1000 | | | | | | | | | | |
| | ditto | 2000 | | | | | | | | | | |
| | polytetramethylene glycol | 650 | | | | | | | | | | |
| | ditto | 850 | | | | | | | | | | |
| | ditto | 1000 | | · | | | | | | | | |
| | polyethylene glycol | 600 | | | | | | | | | | |
| | bisphenol-A + propylene oxide | 800 | | | | 1.0 | | | | 1.0 | 1.0 | 1.0 |
| Chain extender | ethylene glycol | 62 | | | | 0.31 | 0.71 | 0.51 | 0.51 | | | |
| | 1,4-butane glycol | 90 | | | | | | | | 0.51 | | |
| | bis(2-hydroxyethyl)hydroquinone | 198 | | | 0.51 | | | | | | 0.51 | 0.81 |
| | bisphenol-A + ethylene oxide | 327 | | | | | | | | | | |
| | ditto | 360 | 0.51 | 0.51 | | | | | | | | |
| | bisphenol-A + propylene oxide | 360 | | | | | | | | | | |
| Measured values of physical properties | Tg (°C) | | 10 | 11 | 22 | 2 | 15 | 11 | 12 | 35 | 40 | 48 |
| | E/E' | | 126 | 126 | 107 | 83 | 122 | 100 | 135 | 124 | 138 | 152 |
| | Crystallinity (wt%) | | 15 | 20 | 15 | 20 | 15 | 15 | 10 | 10 | 5 | 5 |

Embodiment 1

The present invention was applied to fitting a transparent plate into an integrally formed round window frame (10 cm in diameter, with a 2 mm deep groove) of an alarm clock. First, a polymer having a Tg of 48°C was prepared by prepolymer process according to the formulation of Example No. 40 shown in Table 1. The polymer was made into a transparent body (3-mm thick plate) by extrusion molding. The plate was cut into a disc 10.4 mm in diameter as a window material. This window material was fitted into a frame-like jig which was capable of tightening the periphery of the window material. With the window material heated to about 70°C, the jig was tightened so that the window material became slightly smaller than 10 cm in diameter. Subsequently, the window material was allowed to cool to room temperature, so that the deformed shape was set. The window material was fitted into the frame of the alarm clock. Upon heating to about 60°C, the window material restored its original flat shape in 7-8 seconds, snugly fitting into the window frame. Incidentally, this window material has a refractive index of 1.48 and a modulus of about 10000 kgf/cm² at room temperature.

Embodiment 2

A polymer having a Tg of 40°C was prepared by prepolymer process according to the formulation of Example No. 39 shown in Table 1. The polymer was made into a quadrangular prism (5 mm x 5 mm) by extrusion molding. The quadrangular prism was cut into a 30-cm long ruler. This ruler remembers the as-molded straight shape and hence it can be used as a straightedge as such. This ruler can also be used as an adjustable curve ruler when it is deformed in a desired shape. The deformation is accomplished by heating the ruler to about 50°C or above, and the deformation is set when the heated ruler is cooled to room temperature by blowing a cooling gas from a gas bomb.

Unlike the conventional adjustable curve ruler which retains its curved shape with difficulty, the ruler in this embodiment retains its curved shape indefinitely during use. After use as an adjustable curve ruler, the ruler restores its original straight shape when it is heated to about 50°C or above with an air blow dryer, and the ruler can be used as a straightedge.

Embodiment 3

A polymer having a Tg of 35°C was prepared by prepolymer process according to the formulation of Example No. 38 shown in Table 1. The polymer was made into a goldfish globe (2.5 mm thick and 30 cm in diameter) by blow molding.

The goldfish globe was heated in hot water at about 50°C and then collapsed by the application of forces to both sides. The goldfish globe was cooled to room temperature to set the collapsed shape. The collapsed shape is convenient for transportation and storage on account of its reduced size.

Prior to use as the goldfish globe, the collapsed goldfish globe was heated in hot water at 50°C or above for the restoration of its original global shape. Incidentally, the goldfish globe was provided with a shell mark when it was impressed with a shell mark while it was still hot before cooling to room temperature.

As the above-mentioned embodiments show, the present invention provides a transparent body which remembers a first shape (basic shape), takes on a second shape upon deformation with simple heating operation, and restores its basic shape easily when necessary owing to its shape memory performance.

**Claims**

1. A shape memory transparent body formed from a shape memory transparent polymer having a glass transition point higher than the temperature at which the transparent body is used, said transparent body remembering a basic shape, taking on a second shape upon heating to a temperature higher than the glass transition point and subsequent cooling to a temperature lower than the glass transition point, with the transparent body kept deformed by an external force for the setting of the deformed shape, and restoring the basic shape upon heating to a temperature higher than the glass transition point.

2. A method of using a shape memory transparent body which comprises heating the transparent body which remembers its basic shape to a temperature higher than the glass transition point, deforming the transparent body into a desired shape, cooling the deformed transparent body to a temperature lower than the glass transition point while keeping the deformed shape using a frame or proper shape keeping means, thereby setting the deformed shape, taking out the transparent body having the second shape, and heating the transparent body to a temperature higher than the glass transition point, thereby causing the transparent body to restore its basic shape when the transparent body needs the basic shape.